# EUROPEAN PATENT APPLICATION

(11) **EP 4 197 344 A1**
(43) Date of publication of application: **21.06.2023**
(21) Application number: 21216010.5
(22) Date of filing: 20.12.2021
(51) Int. Cl.: A23L 2/54, B01F 23/236, B01F 23/2361, B01F 23/237, B67D 1/00

(54) **BEVERAGE CARBONATING DEVICE AND BEVERAGE VESSEL**

(71) Applicant: Versuni Holding B.V., 5656 AE Eindhoven (NL)
(72) Inventor: SINNEMA, Anke Gerda, 5656 AE Eindhoven (NL); BERTRAM, Dietrich, 5656 AE Eindhoven (NL); LOOPSTRA, Kasper Roelof, 5656 AE Eindhoven (NL)
(74) Representative: Vollering, Stefanus Franciscus Maria

(57) **Abstract**

The present invention relates to a beverage carbonating device (10), comprising a carbon dioxide production unit (12) that is configured to produce carbon dioxide gas by mixing at least two reactants; and a pressure container (14) that is configured to store the produced carbon dioxide gas in a pressurized gaseous state. The pressure container (14) is configured as a detachable module that is sealingly detachable from the carbon dioxide production unit (12) so that the carbon dioxide gas is stored and sealed in the pressure container (14) when detached from the carbon dioxide production unit (12). The present invention further relates to a beverage vessel (18) that may be used with such a device (10).

## Description

### FIELD OF THE INVENTION

The present invention relates to a beverage carbonating device. Such devices are sometimes also referred to as beverage carbonators or simply as carbonators. These devices are typically provided as domestic/kitchen appliances and used to carbonate water or other beverages by means of carbon dioxide (CO₂). The present invention furthermore relates to a beverage vessel that may be used with such a beverage carbonating device.

### BACKGROUND OF THE INVENTION

Various possibilities are currently available to get carbonated water or other carbonated beverages. A first possibility, which is the most common one, includes ready-to-drink beverages that are already carbonated during production by the producer. However, more and more people carbonate their water themselves by means of home-carbonating devices.

A lot of home-carbonating devices use CO₂-cartridges to carbonate water or other beverages. The beverage that is to be carbonated is typically filled up in a bottle and carbonated afterwards by arranging the filled bottle below a dispenser of the device that dispenses the carbon dioxide from the cartridge into the beverage that is filled up in the bottle.

Compared to the first possibility of buying ready-to-drink beverages that are already carbonated, the latter mentioned possibility is from an ecological standpoint typically more beneficial, as less plastic and other harmful materials need to be produced. On the other hand, however, the handling of the CO₂-cartridges and the fact that they need to be exchanged quite often appears to be cumbersome for a lot of users.

A third possibility are home-carbonating devices which use a mix of acid and sodium bicarbonate (baking soda) to produce the carbon dioxide internally in the device. A beverage carbonation system of this type is exemplarily known from CA 2 875 899 A1.

This beverage carbonation system has a container that is preferably provided in the form of a bottle and removably engageable with a carbonator. The container/bottle has a container outlet valve and a container inlet valve that are fluidly engageable with a carbonator outlet port and a carbonator inlet port, respectively. At least one pump transfers liquid and carbon dioxide gas between a container/bottle chamber and a carbonation chamber when the container/bottle is engaged with the carbonator, thereby carbonating the liquid in the container/bottle. When the container/bottle is disengaged from the carbonator, the container outlet valve and the container inlet valve are closed to fluidly seal the container containing the carbonated liquid.

The system disclosed in CA 2 875 899 A1 appears to be more sustainable than the devices and systems mentioned at the outset. However, the system still has several drawbacks.

First of all, special bottles are needed that have an interface with an inlet and an outlet valve compatible to the corresponding interface at the carbonator.

Secondly, the carbonation process takes quite a while with such kind of system. In order to start the carbonation process, some amount of water that is filled up in the bottle needs to be withdrawn from the bottle so as to initiate the carbonation in the carbonator by mixing the reactants (typically acid and sodium bicarbonate) with the water. Carbon dioxide is then generated in the carbonator and afterwards dispensed into the remaining water in the bottle. While the end user typically does not recognize these single steps of withdrawing some water from the bottle, producing the carbon dioxide and dispensing the carbon dioxide into the bottle, the user typically recognizes that it takes some while until the process is finished, i.e. until the beverage is carbonated. Again, this might appear to be cumbersome for a lot of end users.

### SUMMARY OF THE INVENTION

It is an object of the present invention to provide a beverage carbonating device that overcomes or alleviates one or more of the above-mentioned drawbacks of the known carbonating devices. It is particularly an object to provide a beverage carbonating device with a sustainable handling and that is able to carbonate beverages comparably fast. It is furthermore an object to provide a possibility for a carry-on solution.

In a first aspect of the present invention a beverage carbonating device is presented that comprises:
a carbon dioxide production unit that is configured to produce carbon dioxide gas by mixing reactants, e.g. at least two reactants; and
a pressure container that is configured to store the produced carbon dioxide gas in a pressurized gaseous state, wherein the pressure container is configured as a detachable module that is sealingly detachable from the carbon dioxide production unit so that the carbon dioxide gas is stored and sealed in the pressure container when detached from the carbon dioxide production unit.

In a second aspect of the present invention a beverage vessel is presented that comprises:
a beverage compartment that is configured to receive a beverage to be carbonated;
a beverage container that is configured to store carbon dioxide gas in a pressurized gaseous state; and
a valve that is configured to seal the pressure container in a closed state and to release the carbon dioxide gas from the pressure container into the beverage compartment in an open state.

Preferred embodiments of the invention are defined in the dependent claims. It shall be understood that the claimed beverage vessel has similar and/or identical preferred embodiments as the claimed beverage carbonating device, in particular as defined in the dependent claims and as disclosed herein.

The present invention is based on the idea of providing a pressure container that is used as a carbon dioxide gas buffer for storing the carbon dioxide gas that is produced in the carbon dioxide production unit. Buffering or storing the produced carbon dioxide in the pressure container in a pressurized gaseous state has the advantage that carbon dioxide may be produced internally in the device beforehand, i.e. before using it for carbonating the beverage to be carbonated, and to then store it in the pressure container until it is needed.

Since the pressure container is configured as a detachable module, the pressure container can be used as a carry-on device that the user may take with him/her and use at any time he/she wants. The user may use the pressure container at any time and place remote from the carbon dioxide production unit to carbonate a beverage.

The detachable pressure container is preferably provided as a part of a beverage vessel that comprises, besides the pressure container, a beverage compartment that is separated from the pressure compartment by at least one separating wall and a valve that seals the pressure container in the closed state of the valve and releases the carbon dioxide gas from the pressure container into the beverage compartment in the open state of the valve.

A user may thus store the carbon dioxide gas in a pressurized gaseous state in the pressure container within the beverage vessel separate from the beverage that is to be carbonated. The beverage vessel may then be detached from the carbon dioxide production unit, so that the user may take the beverage vessel anywhere he/she wants. The beverage compartment may either be pre-filled or filled with beverage at any later point in time. That means, the pressure container and the beverage compartment do not need to be filled at the same time, but may be filled separately from each other with the beverage and the carbon dioxide gas, respectively.

When the user wants to carbonate the beverage, the user may open the valve in order to initiate the carbonation process.

When a user wants to carbonate the beverage, the carbonation process may be started instantaneously upon request of the user (i.e. upon opening the valve between the pressure container and the beverage compartment). No preparation time is needed for the production of the carbon dioxide, since the carbon dioxide has been already produced beforehand and stored in the pressure container.

The carbon dioxide may be produced in the carbon dioxide production unit by mixing at least two reactants. A CO₂-cartridge is not needed.

Preferably, a first reactant comprises sodium bicarbonate (NaHCO₃) and a second reactant comprises an acid (e.g. a citric acid, a tartaric acid, vinegar or pyruvate). Typically, water may be used as further ingredient. Water may be introduced into the carbon dioxide production unit separately from the other reactants. Alternatively, the acid may be premixed with the water such that the water-acid-mix is introduced into the carbon dioxide production unit as one of the reactants and sodium bicarbonate is introduced into the carbon dioxide production unit as the other one of the reactants.

The pressure container is preferably configured to be sealingly detachable from the carbon dioxide production unit. This means that the carbon dioxide gas is sealed in the pressure container when detached from the carbon dioxide production unit.

According to a refinement, the pressure container may comprise a first connection interface that is configured to seal the pressure container when being closed and to form an inlet for inletting the carbon dioxide gas produced by the carbon dioxide production unit into the pressure container when being open.

Hence, the first connection interface ensures that the pressure container is sealed when the pressure container is disengaged from the carbon dioxide production unit.

According to a further refinement, the carbon dioxide production unit may comprise a second interface that is configured to seal the carbon dioxide production unit when being closed and to form an outlet for releasing the carbon dioxide gas to the pressure container when being open.

Hence, also the carbon dioxide production unit will be sealed when the pressure container is detached from the carbon dioxide production unit.

The first connection interface and the second connection interface may be configured to automatically open when the pressure container is connected to the carbon dioxide production unit and to automatically close when the pressure container is detached from the carbon dioxide production unit.

The first and second connection interface may for instance each comprise a valve. These valves may be configured as a self-opening and self-closing valve. The valve of the first connection interface is herein denoted as "first valve". The valve of the second connection interface is herein denoted as "second valve".

The automatic opening and closing feature of the two valves may be realized in many different ways. The two valves may be electronically controlled such that they open as soon as the two interfaces are connected to one another and close when the two interfaces are detached from one another. Alternatively, at least one of the two connection interfaces may comprise a mechanical element that opens the two valves when the two connection interfaces are connected to one another and closes both valves when the interfaces are detached from one another. Both principles shall be herein understood as an "automatic" opening and closure.

In a further refinement, the second connection interface may be configured to ensure that at least 90 % by volume of a fluid comprising the produced carbon dioxide gas entering the pressure container is gaseous. More preferably, the second connection interface may be configured to ensure that at least 95 % by volume of the fluid comprising the produced carbon dioxide gas and entering the pressure container is gaseous. Most preferably, the fluid entering the pressure container is 100 % gaseous. This provides the advantage that merely gas comprising the carbon dioxide gas is released from the carbon dioxide production unit to the pressure container. Most preferably, pure carbon dioxide gas is released from the carbon dioxide production unit.

The first and/or the second connection interface is/are preferably configured to prevent liquid from entering the pressure container. This may be realized by arranging the carbon dioxide production unit in gravity direction below the pressure container and arranging an overpressure valve between the carbon dioxide production unit and the pressure container. Thus, even though some amount of water is used in the carbon dioxide production unit for mixing the at least two reactants for the carbon dioxide production, solely gas containing the CO₂ is released via the overpressure valve into the pressure container.

In a further refinement, the first connection interface or the second connection interface may comprise a carbon dioxide dosing unit that is configured to limit the amount of carbon dioxide gas entering the pressure container to a predefined amount of carbon dioxide gas.

Hence, the dosing unit serves for a predefined dosing of the amount of carbon dioxide gas entering the pressure container. This is not only advantageous for security reasons (i.e. preventing a breakage of the pressure container), but is also advantageous, as the amount of carbon dioxide gas entering the pressure container may be dosed according to the user's needs. For example, the dosage unit may be configured to limit the amount of carbon dioxide gas entering the pressure container to a predefined amount that is suitable for carbonating a predefined amount of beverage that fits into the beverage compartment of the beverage vessel.

The carbon dioxide dosing unit may, for example, comprise a timer or a pressure sensor. A timer may be sufficient if the volumetric flow (volume per time) of the carbon dioxide gas entering the pressure container is known or easy to estimate. Otherwise, it might be more beneficial to use a pressure sensor and an electronically controlled valve that is controlled based on the signal generated by the pressure sensor. For example, the valve could be controlled to be closed if a predetermined pressure is sensed in the pressure container by means of the pressure sensor.

According to a further refinement, the beverage carbonating device further comprises a beverage vessel interface that is configured to receive a beverage vessel, wherein the beverage vessel interface comprises the second connection interface.

The beverage vessel interface may be of any design. The beverage vessel may also be of any conceivable design.

Integrating the second connection interface into the beverage vessel interface provides the advantage that the outlet for releasing the carbon dioxide gas from the carbon dioxide production unit to the pressure container may easily be opened as soon as the beverage vessel is received by the beverage vessel interface. The beverage vessel itself may electronically and/or mechanically actuate the second connection interface to open in order to release the carbon dioxide from the carbon dioxide production unit.

The beverage carbonating device may further comprise a beverage vessel that comprises the pressure container and a beverage compartment that is configured to receive a beverage to be carbonated. Said beverage vessel may be provided as a separate entity that belongs to the beverage carbonating device according to the present invention. Of course, a plurality of such beverage vessels may be provided for the beverage carbonating device according to the present invention, such that a user may use several beverage vessels at a time.

In the following, several refinements are presented for the beverage vessel. These refinements relate to both a beverage vessel that is provided as separate entity as well as to a beverage vessel that is part of the beverage carbonating device according to the present invention.

According to a refinement, the beverage compartment and the pressure container are fluidly connected to each other via a valve. This valve is herein denoted as "third valve".

This provides an easy and cost-efficient solution. If the user wants to carbonate the beverage in the beverage compartment, he/she simply has to open the third valve.

In a further refinement, the beverage vessel comprises an actuator that is configured to open the third valve when being actuated. The user may thus open the third valve simply by actuating the actuator. This actuator may comprise a mechanical button. Alternatively, the actuator may be realized as a wall part of the pressure container having a thinner wall thickness such that the user may deform said wall part to open the third valve. The third valve may in this case be mechanically connected to said thin wall part.

Several further solutions are conceivable for realizing said actuator, e.g. by providing an electronic or electromechanical actuator that is electronically controlled.

In a further refinement, the pressure container is configured to be sealingly detachable from the beverage compartment so that the carbon dioxide gas is stored and sealed in the pressure container when being detached from the beverage compartment. Thus, the pressure container is in this refinement releasably attached to the beverage compartment. This provides the advantage that a user may use a plurality of pressure containers with one and the same beverage compartment. This may be particularly advantageous on travel, as the user may carry several pre-filled pressure containers and use one after the other with one and the same beverage compartment or several in parallel with several different beverage compartments in order to carbonate a plurality of beverages sequentially or in parallel.

The pressure container may further comprise a third connection interface that is configured to seal the pressure container when being closed and to form an outlet for releasing the carbon dioxide gas into the beverage compartment when being open.

The beverage compartment may comprise a fourth connection interface that is configured to seal the beverage compartment when being closed and form an inlet for the carbon dioxide gas stored in the pressure container when being open. The third and fourth connection interface may be configured to open when the pressure container is connected to the beverage compartment and/or to close when the pressure container is detached from the beverage compartment.

Preferably, both the beverage compartment and the pressure container are sealed if they are detached from one another. Thus, the carbon dioxide gas that remains in the pressure container will be sealed and may be used to carbonate another beverage. Also the beverage compartment may be sealed such that the carbonated beverage does not lose its carbonation.

If the third connection interface and the fourth connection interface are configured to open when the pressure container is connected to the beverage compartment, an extra actuator for carbonating the beverage is not needed. The beverage will get carbonated as soon as the pressure container is connected to the beverage compartment.

In a further refinement, the beverage compartment may comprise an outlet opening and a lid that is configured to close the outlet opening. Said outlet opening is typically used for drinking the carbonated beverage.

In a further refinement, the carbon dioxide production unit may comprise a mixing chamber for the mixing of the reactants.

The mixing chamber may be connected to the pressure container via the above-mentioned connection interface. Said connection interface may comprise an overpressure valve. In the mixing chamber, the ingredients for producing the carbon dioxide may come together and the reaction between the reactants may take place. The produced carbon dioxide may then be released into the pressure container and stored therein until it is released from the device via the gas outlet valve.

In a further refinement, the mixing chamber may comprise a motorized mixing element that is configured to actively mix the reactants in the mixing chamber.

This may increase the production rate of carbon dioxide, as it accelerates the reaction between the reactants.

The motorized mixing element may, for example, include a rotating element.

Mixing of the reactants and production of the carbon dioxide may be furthermore enhanced by a heating element that is configured to heat the mixing chamber.

In a still further refinement, the carbon dioxide production unit may comprise a pump that is configured to pump water and/or at least one reactant into the mixing chamber.

This may further improve the mixing of the reactants and the production of the carbon dioxide. Said pump may be used to pump water as one of the ingredients for the production of the carbon dioxide into the mixing chamber of the carbon dioxide production unit.

In a further refinement, the mixing chamber may comprise a first inlet that is fluidly connected to a first reactant supply via which a first reactant is supplied, and a second inlet that is fluidly connected to a second reactant supply via which a second reactant is supplied.

The first and second reactants supply may be done either manually by the user or controlled in an automatic manner by a control unit of the beverage carbonating device. Furthermore, it is possible to use pre-packed cartridges or sachets. In case of such cartridges, the at least two reactants may be separated from each other within the cartridge until the production of the carbon dioxide is initiated.

In a further refinement, the first reactant supply may comprise a first dosing unit that is configured to dose an amount of the first reactant supplied to the first inlet, and the second reactant supply may comprise a second dosing unit that is configured to dose an amount of the second reactant supplied to the second inlet.

Dosing can be controlled by the control unit.

In a further embodiment, the beverage carbonating device may comprise at least two storage containers for storing at least two reactants, wherein these two storage containers are connected to the mixing chamber, preferably via an electronically or electromechanically controlled valve.

In a further refinement, the presented beverage carbonating device may comprise a pressure sensor that is configured to detect a gas pressure in the pressure container, and a control unit that is configured to control the carbon dioxide production unit based on the gas pressure that is detected by the pressure sensor.

This provides the advantage that the amount of carbon dioxide produced in the carbon dioxide production unit may equal the amount that is effectively needed. For example, the control unit may be configured to control the carbon dioxide production unit to start producing carbon dioxide if the gas pressure in the pressure container is below a predetermined lower pressure limit, and to stop producing carbon dioxide if the gas pressure in the pressure container is above a predefined upper pressure limit.

The control unit may, for example, be configured to control the first dosing unit and the second dosing unit based on the gas pressure that is detected by the pressure sensor. In other words, the control unit in this case controls the supply of the reactants into the mixing chamber based on the gas pressure detected by the pressure sensor.

In a further refinement, the beverage carbonating device may comprise a pressure sensor that is configured to detect a gas pressure in the pressure container, and a control unit that is configured to control at least one of the first valve, the second valve and the third valve based on the gas pressure that is detected by the pressure sensor.

Controlling the valves based on the gas pressure in the pressure container provides the advantage, that, on the one hand, the degree of carbonation in the beverage to be carbonated may be controlled, and, on the other hand, damage of the pressure container or any other parts of the beverage carbonating device may be prevented.

In the foregoing text parts, the term "control unit" has been mentioned in correspondence with several different control functions. These control functions may all be controlled by one and the same control unit. However, it is also possible to use separate entities for controlling the functions. The above-mentioned functions of the control unit can be combined with each other in any way without departing from the scope of protection of the present invention.

### BRIEF DESCRIPTION OF THE DRAWINGS

These and other aspects of the invention will be apparent from and elucidated with reference to the embodiment(s) described hereinafter. In the following drawings
Fig. 1 shows a schematic view of a first embodiment of the beverage carbonating device according to the present invention;
Fig. 2 shows a schematic view of a second embodiment of the beverage carbonating device according to the present invention; and
Fig. 3 shows a schematic view of a third embodiment of the beverage carbonating device according to the present invention.

### DETAILED DESCRIPTION OF THE INVENTION

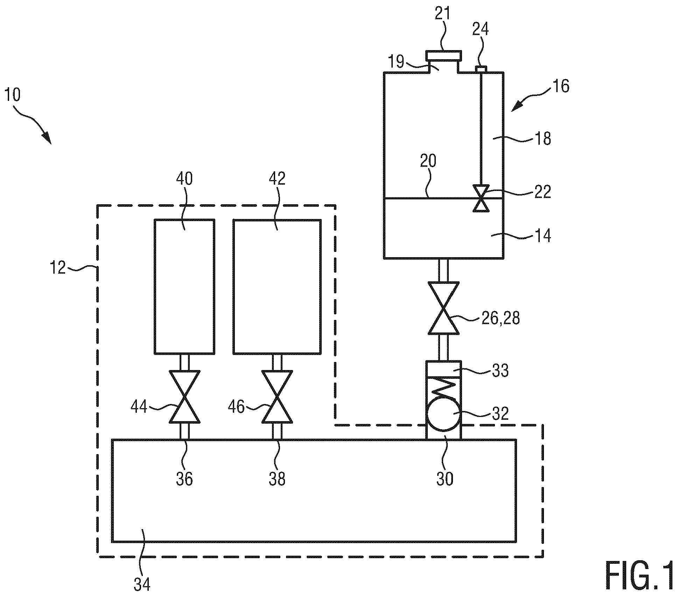

Fig. 1 shows a first embodiment of the beverage carbonating device in a schematic block diagram. The beverage carbonating device is therein denoted in its entirety by reference numeral 10.

The beverage carbonating device 10 comprises a carbon dioxide production unit 12 for producing carbon dioxide gas. The carbon dioxide production unit is denoted by reference numeral 12 and schematically indicated by dotted line encircling several components of the carbon dioxide production unit 12 that are explained further below.

The beverage carbonating device 10 further comprises a pressure container 14 which serves to store the carbon dioxide gas that is produced in the carbon dioxide production unit 12. This pressure container 14 may comprise a tank in which the carbon dioxide gas can be stored in a pressurized gaseous state.

The pressure container 14 is configured as a detachable module that is detachable from the carbon dioxide production unit 12. When the pressure container 14 is detached from the carbon dioxide production unit, the carbon dioxide gas is sealed in the pressure container 14.

The pressure container 14 forms a part of a beverage vessel 16. This beverage vessel 16 may exemplarily have the shape of a bottle or a canister. The beverage vessel 16 further comprises a beverage compartment 18 which is separated from the pressure container 14 by a separation wall 20. In the separation wall 20, a valve 22 is arranged that is herein denoted as "third valve". It shall be noted that the numbering that is used herein for the valve 22 (third valve) does not imply any order or other meaning, but only serves to distinguish between the different valves that are comprised in the beverage carbonating device 10.

The third valve 22 fluidly connects the pressure container 14 to the beverage compartment 18 when the valve 22 is open. The valve 22 may be opened by means of an actuator 24. This actuator 24 can, for example, comprise a mechanical button that is mechanically connected to the valve 22, such that by pressing the button the valve 22 is opened. Of course, many other configurations of the actuator 24 are conceivable for opening and closing the valve 22.

When using the beverage carbonating device 10 according to the present invention a user may thus fill the pressure container 14 with the carbon dioxide gas that is produced in the carbon dioxide production unit 12. The beverage vessel including the beverage container 14 may then be detached from the carbon dioxide production unit 12, and the user may fill the beverage compartment 18 with a beverage to be carbonated (e.g. water). When the user wants to carbonate the beverage contained in the beverage compartment 18, he/she simply has to actuate the actuator 24 to initiate the carbonation process. This may be done at any time and any location remote from the carbon dioxide production unit 12.

The carbonated beverage may be released from the beverage compartment 18 via an outlet opening 19 that is closed by a lid 21.

The interface between the carbon dioxide production unit 12 and the pressure container 14 are preferably realized such that both the carbon dioxide production unit 12 and the pressure container 14 are automatically sealed when they are detached from one another. The pressure container 14 comprises a first connection interface 26 that preferably comprises a first valve 28. The carbon dioxide production unit 12 comprises a second interface 30 which preferably includes a second valve 32. This second valve 32 may comprise an overpressure valve that automatically opens in case of an overpressure in the carbon dioxide production unit 12.

The preferably forms part of a beverage vessel interface 33 for receiving the beverage vessel 16.

Both valves 28, 32 are preferably configured to open automatically when the pressure container 14 is connected to the carbon dioxide production unit 12. Also preferably, the two valves 28, 32 are configured to automatically close when the pressure container 14 is detached from the carbon dioxide production unit 12.

The carbon dioxide gas is produced in the carbon dioxide production unit 12 within a mixing chamber 34. The mixing chamber 34 comprises two inlets 36, 38 that are herein denoted as first inlet 36 and second inlet 38.

Each of the inlets 36, 38 is connected to a reactant supply 40, 42. Reactant supply 40 is herein denoted as first reactant supply 40. Reactant supply 42 is herein denoted as second reactant supply 42.

In the simplest case, the reactant supplies 40, 42 are each realized as openings or receptacles for receiving the reactants in a manual way. However the reactant supplies 40, 42 may also be realized as tanks or containers that are configured to store the reactants. These containers can be connected to the inlets 36, 38 of the mixing chamber 34 via valves 44, 46, as this is exemplarily shown in Fig. 1. The valves 44, 46 are herein also denoted as dosing units 44, 46, as they serve to dose the amount of the reactants supplied to the mixing chamber 34. In the simplest case, these valves 44, 46 are realized as mechanical valves that may be manually opened and closed.

It should be noted that the valves 44, 46 do not necessarily have to be provided. Especially in case the reactant supplies 40, 42 are realized as mere openings or receptacles, such valves 44, 46 are not needed. It is also possible to provide the reactants within a cartridge in which the reactants are separated e.g. by a separating wall. In such case the reactants may be released into the mixing chamber 34 by means of pinching the cartridge with a suitable pinching element.

The inlets 36, 38 may also include a mechanical transport mechanism (e.g. an Archimedes screw) or some kind of solid-powder dosing system (e.g. a mechanical flap that opens and closes).

The first reactant which is supplied via the first reactant supply 40 preferably comprises an acid, such as a citric acid, tartaric acid, vinegar or pyruvate. This acid is in the example shown in Fig. 1 preferably mixed with water to form the first reactant. The mixture may be stored as a pre-mixture of acid and water in the first reactant supply 40. The second reactant supply 42 may contain sodium bicarbonate stored in a solid state. Alternatively, also the acid may be stored in a solid state and the base may be dissolved. The reactants are therefore neither limited to any specific substance or a specific state of aggregation.

As soon as these two reactants get mixed in the mixing chamber 34 carbon dioxide gas is automatically produced. The produced carbon dioxide gas leaves the mixing chamber 34 and enters the pressure container 14.

The connection interface 30 is configured to ensure that at least 90 % by volume of the fluid comprising the produced carbon dioxide gas that is entering the pressure container 14 is gaseous. In other words, this connection interface 30 shall prevent liquid from entering the pressure container 14. The connection interface 30 is thereto preferably arranged at an upper side of the mixing chamber 34. In this way, only gas is leaving the mixing chamber 34, while the liquid containing the water, which was introduced into the mixing chamber 34 from the first reactant supply 40, remains in the mixing chamber 34. This remaining waste material may be dispensed from the mixing chamber 34 into a dump area or separated dumb dump box which may be integrated into the device 10 or removable therefrom (for simplicity reasons not shown).

The connection interface 30 may furthermore comprise a pump that is provided in addition to the valve 32 or instead of the valve 32. The advantage of a pump that fluidly connects the mixing chamber 34 to the pressure container 14 is the ability to thereby increased pressure in the pressure container 14, allowing a quicker carbonation (as the amount of carbon dioxide dissolved in the beverage is a function of partial pressure pCO₂) and allowing a smaller pressure container 14 from the same amount/mass of carbon dioxide. Further, in the embodiment shown in Fig. 1, all pressure is coming from the chemical direction in the mixing chamber 34. The speed of this reaction is negatively influenced by a larger pCO₂. By adding a pump in place of or in addition to the valve 32, one would get more carbon dioxide gas out of the same amount of reactants.

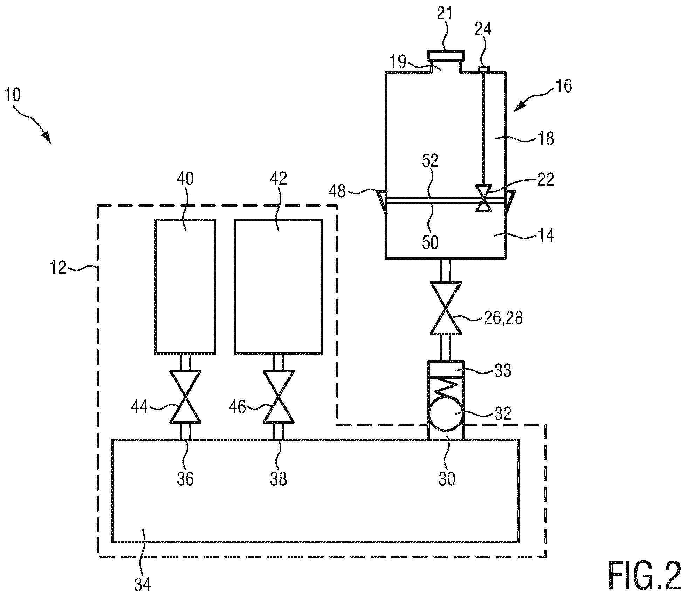

Fig. 2 shows a second embodiment of the beverage carbonating device 10 in a schematic block diagram. The structure of the carbon dioxide production unit 12 of the second embodiment shown in Fig. 2 is the same as in the first embodiment shown in Fig. 1. However, the structure of the beverage vessel 16 differs from the one shown in Fig. 1.

In this second embodiment, the beverage container 14 is releasably attached to the beverage compartment 18. In other words, beverage compartment 18 and pressure container 14 may be separated from one another. One or more mechanical fastening elements 48 may be provided to fasten the pressure container 14 to the beverage compartment 18. Of course, depending on the structure of the fastening element 48 only one fastening element may be sufficient.

Having the pressure container 14 releasably attached to the beverage compartment 18 provides several advantages. The user may connect the pressure container 14 to the beverage compartment 18 at any time he/she desires. The user may also have a plurality of pressure containers 14 filled with carbon dioxide gas and connected to one and the same beverage compartment 18 one after the other in order to carbonate several beverages. In this case it is preferred that the pressure container 14 comprises a third interface that is configured to seal the pressure container 14 when being closed and to form an outlet for releasing the carbon dioxide into the beverage compartment 18 when being open. Similarly, the beverage compartment 18 comprises a fourth connection interface 52 that is configured to seal the beverage compartment 18 when being closed and perform an inlet for the carbon dioxide gas stored in the pressure container 14 when being open.

The third interface 50 and the fourth interface 52 are configured to close when the pressure container 14 is detached from the beverage compartment 18. Then, both the carbon dioxide gas stored in the pressure container 14 and the carbonated beverage stored in the beverage compartment 18 are sealed.

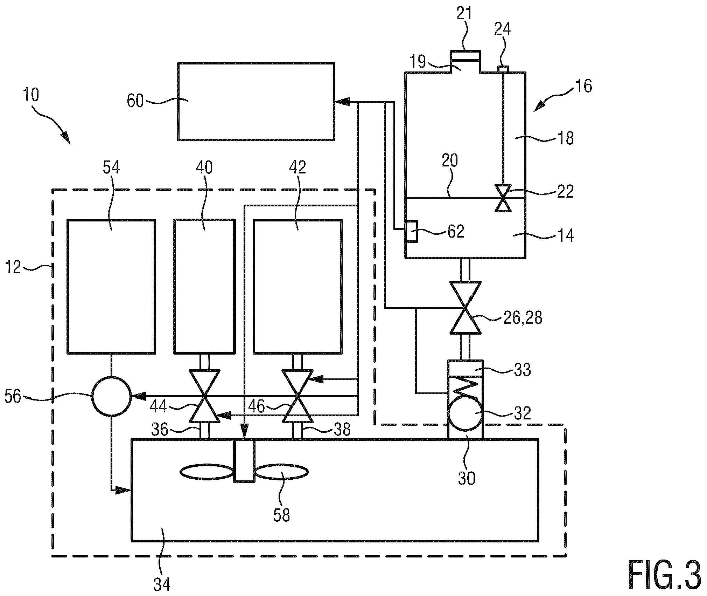

Fig. 3 shows a third embodiment of the beverage carbonating device 10. The beverage vessel 16 therein has a similar structure as the beverage vessel 16 shown in Fig. 1. However, several further refinements are included in the carbon dioxide production unit 12 and by means of additional components.

The carbon dioxide production unit 12 in this case comprises a further reactant supply 54. This further reactant supply 54 may comprise a water tank containing water that is used for the production of carbon dioxide gas. The water contained in this water tank 54 is preferably pumped into the mixing chamber 34 by means of a pump 56. The pump 56 may help to pump water and/or at least one of the reactants into the mixing chamber 34, in order to initiate or continue the carbon dioxide gas production.

Since the water is in this embodiment provided via a separate inlet into the mixing chamber 34, the reactant supply 40 may in this case contain pure acid.

The mixing chamber 34 further comprises a motorized mixing element 58 that is configured to actively mix the reactants in the mixing chamber 34. This active mixing further accelerates the carbon dioxide production.

Another improvement of the third embodiment shown in Fig. 3 is the provision of a control unit 60. The control unit 60 may comprise a processor or any type of other suitable electronic circuitry that is configured to process input signals and generate output signals based on these input signals and a programmed control logic. For example, the control unit 60 may be configured to control valves 28, 32, 44, 46. The valves 28, 32, 44, 46 may in this case be realized as electromechanical valves. The control unit 60 may also be configured to control the operation of the mixing element 58. Still further, the control unit 60 may be configured to control the operation of the pump 56. It shall be noted that one and the same control unit may be used for controlling all the afore-mentioned components of the beverage carbonating devices 10. However, each and every component may also be controlled by means of separate entities. Even in such case, these separate entities would be summarized as control units 60 in the meaning of the present invention. Still further, it shall be noted that all possible permutations of controlling all, some or only one of the components 28, 32, 44, 46, 56 and 58 are possible. For example, the control unit 60 may be configured to control solely the valves 32, 44 and 46.

The control unit 60 is preferably configured to control the components of the beverage carbonating device 10 depending on an internal pressure of the pressure container 14. This pressure in the pressure container 14 may be detected by means of a pressure sensor 62. This pressure sensor 62 is preferably configured to detect a pressure in the pressure container 14 and generate a signal that depends from said pressure. The signal of the pressure sensor 62 is used in the control unit 60 as input signal.

The control unit 60 may be configured to control the carbon dioxide production unit 12 based on the gas pressure detected by the pressure sensor 62. Thereto, the control unit 60 may control valves 44, 46 to open and pump 56 to start pumping, if the pressure detected by the pressure sensor 62 is below a predefined minimum pressure threshold. Then, the control unit 60 may also turn on the mixing element 58.

On the other hand, the control unit 60 may be configured to close the valves 44, 46 and to turn off the pump 56 and the mixing element 58 if the pressure detected by the pressure sensor 62 is above a predefined upper pressure threshold.

The control unit 60 may be furthermore configured to control at least one of valves 28 and 32 based on the gas pressure that is detected by the pressure sensor 62. For example, the control unit 60 may be configured to control valve 28 to close if the pressure in the pressure container 14 is above a predefined pressure threshold. This may be used, for example, to dose the amount of carbon dioxide stored in the pressure container 14. Alternatively, the second interface 30 may comprise a carbon dioxide dosing unit that is configured to limit the amount of carbon dioxide gas entering the pressure container 14 to a predefined amount of carbon dioxide gas. This carbon dioxide dosing unit (not explicitly shown) may, for example, comprise a timer or a flowmeter.

It is clear that the components shown in Fig. 2 with respect to the beverage vessel 16 may be also combined with the carbon dioxide production unit 12 according to the third embodiment shown in Fig. 3.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A beverage carbonating device (10), comprising:
a carbon dioxide production unit (12) that is configured to produce carbon dioxide gas by mixing reactants; and
a pressure container (14) that is configured to store the produced carbon dioxide gas in a pressurized gaseous state, wherein the pressure container (14) is configured as a detachable module that is sealingly detachable from the carbon dioxide production unit (12) so that the carbon dioxide gas is stored and sealed in the pressure container (14) when detached from the carbon dioxide production unit (12).

2. The beverage carbonating device according to claim 1, wherein the pressure container (14) comprises a first connection interface (26) that is configured to seal the pressure container (14) when being closed and to form an inlet for the carbon dioxide gas produced by the carbon dioxide production unit (12) into the pressure container (14) when being open.

3. The beverage carbonating device according to claim 1 or 2, wherein the carbon dioxide production unit (12) comprises a second connection interface (30) that is configured to seal the carbon dioxide production unit (12) when being closed and to form an outlet for releasing the carbon dioxide gas to the pressure container (14) when being open.

4. The beverage carbonating device according to claim 2 or 3, wherein the first connection interface (26), respectively the second connection interface (30) comprises a carbon dioxide dosing unit that is configured to limit the amount of carbon dioxide gas entering the pressure container (14) to a predefined amount of carbon dioxide gas.

5. The beverage carbonating device according to any of claims 1-4, further comprising a beverage vessel interface (33) that is configured to receive a beverage vessel (16), wherein the beverage vessel interface (33) comprises the second connection interface (30).

6. The beverage carbonating device according to any of claims 1-5, further comprising a beverage vessel (16) that comprises the pressure container (14) and a beverage compartment (18) that is configured to receive a beverage to be carbonated.

7. The beverage carbonating device according to claim 6, wherein the beverage compartment (18) and the pressure container (14) are fluidly connected to each other via a third valve (22).

8. The beverage carbonating device according to claim 7, wherein the beverage vessel (16) comprises an actuator (24) that is configured to open the third valve (22) when being actuated.

9. The beverage carbonating device according to any of claims 6-8, wherein the pressure container (14) is configured to be sealingly detachable from the beverage compartment (18) so that the carbon dioxide gas is stored and sealed in the pressure container (14) when being detached from the beverage compartment (18).

10. The beverage carbonating device according to any of claims 6-9, wherein the pressure container (14) comprises a third connection interface (50) that is configured to seal the pressure container (14) when being closed and to form an outlet for releasing the carbon dioxide gas into the beverage compartment (18) when being open.

11. The beverage carbonating device according to any of claims 6-10, wherein the beverage compartment (18) comprises a fourth connection interface (52) that is configured to seal the beverage compartment (18) when being closed and to form an inlet for the carbon dioxide gas stored in the pressure container (14) when being open.

12. The beverage carbonating device according to claim 10 and 11, wherein the third connection interface (50) and the fourth connection interface (52) are configured to open when the pressure container (14) is connected to the beverage compartment (18) and/or to close when the pressure container (14) is detached from the beverage compartment (18).

13. The beverage carbonating device according to any of claims 6-12, wherein the beverage compartment (18) comprises an outlet opening (19) and a lid that (21) is configured to close the outlet opening (19).

14. A beverage vessel (16) comprising:
a beverage compartment (18) that is configured to receive a beverage to be carbonated;
a pressure container (14) that is configured to store carbon dioxide gas in a pressurized gaseous state; and
a valve (22) that is configured to seal the pressure container (14) in a closed state and to release the carbon dioxide gas from the pressure container (14) into the beverage compartment in an open state.

15. The beverage vessel according to claim 14, wherein the pressure container (14) comprises a first connection interface (26) that is configured to seal the pressure container (14) when being closed and to form an inlet for the carbon dioxide gas when being open.
